# EUROPÄISCHE PATENTSCHRIFT

(11) **EP 3 820 165 B1**
(45) Veröffentlichungstag und Bekanntmachung des Hinweises auf die Patenterteilung: **27.04.2022**
(21) Anmeldenummer: 20200523.7
(22) Anmeldetag: 07.10.2020
(51) Int. Cl.: H04R 25/00

(54) **VERFAHREN ZUM BETRIEB EINES HÖRGERÄTS SOWIE HÖRGERÄT**
HEARING DEVICE AND METHOD FOR OPERATING A HEARING DEVICE
PROCÉDÉ DE FONCTIONNEMENT D'UN APPAREIL AUDITIF AINSI QU'APPAREIL AUDITIF

(30) Priorität: 11.11.2019 DE 102019217398
(43) Veröffentlichungstag der Anmeldung: 12.05.2021
(73) Patentinhaber: Sivantos Pte. Ltd., Singapore 539775 (SG)
(72) Erfinder: GÖKAY, Umut, 53639 Königswinter (DE); NAUMANN, Frank, 91088 Bubenreuth (DE)
(74) Vertreter: FDST Patentanwälte

(56) Entgegenhaltungen:
- DE-B3-102004 047 759
- US-A1- 2010 080 398
- US-A1- 2016 157 026

## Beschreibung

Die Erfindung betrifft ein Verfahren zum Betrieb eines Hörgeräts sowie ein entsprechendes Hörgerät.

Ein Hörgerät ist üblicherweise einem einzelnen Nutzer zugeordnet und wird von diesem im oder am Ohr getragen, um Schall aus der Umgebung aufzunehmen und modifiziert wieder auszugeben. Hierzu weist das Hörgerät ein Mikrofon auf, welches Schall aufnimmt und ein elektrisches Eingangssignal erzeugt. Dieses wird zur Modifikation einer Signalverarbeitung des Hörgeräts zugeführt. Die Signalverarbeitung gibt als Ergebnis ein elektrisches Ausgangssignal aus, welches dann über einen Hörer des Hörgeräts wieder in Schall umgewandelt wird.

Treffen mehrere Nutzer mit jeweils einem Hörgerät an einem Ort zusammen, ist es unter Umständen sinnvoll, dass die Hörgeräte sich in einem Netzwerk miteinander verbinden, um Daten auszutauschen. Hörgeräte unterschiedlicher Nutzer, welche gemeinsam in einem Netzwerk verbunden sind, sind beispielsweise beschrieben in EP 1 643 801 A2 und EP 3 101 919 A1.

Von besonderer Bedeutung ist die Koordination des Datenaustauschs in dem Netzwerk. Dabei besteht speziell bei der Vernetzung von Hörgeräten in einem gemeinsamen Netzwerk das Problem, dass die zugehörigen Nutzer mobil sind und sich entsprechend beliebig zusammenfinden können, sodass sich auch die Zusammensetzung des Netzwerks spontan und dynamisch ändert. Einzelne Hörgeräte als Teilnehmer des Netzwerks treten neu hinzu oder verlassen das Netzwerk und die Organisation des Netzwerks und des Datenaustauschs ist entsprechend erschwert.

Vor diesem Hintergrund ist es eine Aufgabe der Erfindung, die Vernetzung von Hörgeräten unterschiedlicher Nutzer in einem gemeinsamen Netzwerk zu verbessern. Hierzu soll ein verbessertes Verfahren zum Betrieb eines Hörgeräts angegeben werden. Weiter sollen ein verbessertes Hörgerät sowie ein Verfahren zum Betrieb eines Netzwerks angegeben werden.

Die Aufgabe wird erfindungsgemäß gelöst durch ein Verfahren mit den Merkmalen gemäß Anspruch 1 sowie durch ein Hörgerät mit den Merkmalen gemäß Anspruch 13. Weiter wird die Aufgabe gelöst durch ein Verfahren zum Betrieb eines Netzwerks gemäß Anspruch 14. Vorteilhafte Ausgestaltungen, Weiterbildungen und Varianten sind Gegenstand der Unteransprüche. Dabei gelten die Ausführungen im Zusammenhang mit dem Verfahren zum Betrieb eines Hörgeräts sinngemäß auch für das Hörgerät sowie für das Verfahren zum Betrieb eines Netzwerks und umgekehrt. Sofern nachfolgend Verfahrensschritte beschrieben werden, ergeben sich vorteilhafte Ausgestaltungen für das Hörgerät insbesondere dadurch, dass dieses ausgebildet ist, einen oder mehrere dieser Verfahrensschritte auszuführen.

Das Verfahren dient zum Betrieb eines Hörgeräts, welches auch als Ego-Hörgerät bezeichnet wird. Das Hörgerät ist einem Nutzer zugeordnet und wird oder ist mit einem oder mehreren anderen Hörgeräten, welche jeweils einem anderen Nutzer zugeordnet sind, zum Datenaustausch in einem gemeinsamen Netzwerk verbunden. Das Ego-Hörgerät muss sich von den anderen Hörgeräten nicht zwingend unterscheiden, möglich und geeignet ist aber ebenfalls eine Kombination unterschiedlicher Hörgeräte in demselben Netzwerk. Vorliegend wird die Erfindung speziell aus der Perspektive des Ego-Hörgeräts beschrieben, die Ausführungen gelten aber analog insbesondere auch für die anderen Hörgeräte.

Außerdem werden vorliegend lediglich solche Hörgeräte betrachtet, welche explizit unterschiedlichen Nutzern zugeordnet sind. Ein jeweiliges Hörgerät ist insbesondere ein monaurales oder ein binaurales Hörgerät. Bei einem monauralen Hörgerät trägt ein Nutzer lediglich ein Einzelgerät auf lediglich einer Seite des Kopfes, bei einem binauralen Hörgerät trägt ein Nutzer zwei Einzelgeräte auf unterschiedlichen Seiten des Kopfes. Sämtliche Hörgeräte, welche an dem Netzwerk teilnehmen, sind Hörgeräte unterschiedlicher Nutzer, d.h. dass keine zwei Hörgeräte demselben Nutzer zugeordnet sind. Mit anderen Worten: die Verbindung zweier Einzelgeräte eines binauralen Hörgeräts eines einzelnen Nutzers wird vorliegend nicht betrachtet und ist auch nicht Gegenstand, vielmehr werden vorliegend im Falle zweier Einzelgeräte eines binauralen Hörgeräts diese zusammenfassend als "ein Hörgerät" bezeichnet. Unter "Hörgerät" werden vorliegend somit sämtliche Einzelgeräte verstanden, welche einem einzelnen Nutzer zugeordnet sind.

Das Hörgerät oder eines der anderen Hörgeräte steuert den Datenaustausch, indem dieses als ein Master an dem Netzwerk teilnimmt. Alle übrigen Hörgeräte nehmen jeweils als ein Slave an dem Netzwerk teil. Mit anderen Worten: eines der Hörgeräte, d.h. das Ego-Hörgerät oder ein anderes Hörgerät ist ein Master des Netzwerks, während die verbleibenden Hörgeräte im Netzwerk jeweils Slaves sind, deren Kommunikation vom Master gesteuert wird. Das Netzwerk weist zu einem gegebenen Zeitpunkt insbesondere lediglich einen einzelnen Master auf.

Im Rahmen des Verfahrens wird entschieden, ob das Hörgerät, also das Ego-Hörgerät, als Master oder als Slave an dem Netzwerk teilnimmt, indem eine Betriebsfähigkeit dieses Hörgeräts bestimmt wird und mit der Betriebsfähigkeit der jeweils anderen Hörgeräte verglichen wird und indem das Hörgerät als Master teilnimmt, falls das Hörgerät die höchste Betriebsfähigkeit aufweist, und ansonsten als Slave. Das Ego-Hörgerät tritt also einem bestehenden Netzwerk bei oder bildet mit einem oder mehreren anderen Hörgeräten ein neues Netzwerk, sodass dem Ego-Hörgerät nunmehr eine Rolle zugewiesen werden muss, nämlich entweder Master oder Slave. Diese Zuweisung erfolgt abhängig von der Betriebsfähigkeit des Hörgeräts relativ zu der jeweiligen Betriebsfähigkeit der anderen Hörgeräte, mit welchen eine Verbindung über das Netzwerk hergestellt werden soll.

Die Erfindung geht zunächst von der Beobachtung aus, dass eine Vernetzung von Hörgeräten in einem gemeinsamen Netzwerk zunächst unorganisiert ist, da die diversen Hörgeräte von sich aus regelmäßig die Umgebung nach anderen Hörgeräten und Netzwerken absuchen und zunächst keine feste Rollenverteilung vorgegeben ist, bis ein anderes Hörgerät oder ein bestehendes Netzwerk zur Vernetzung gefunden wird. Selbst eine einmal festgelegte Rollenverteilung muss unter Umständen dynamisch überprüft und angepasst werden, falls sich die Zusammensetzung des Netzwerks ändert, also einzelne Hörgeräte hinzutreten oder das Netzwerk verlassen. Beim Verbindungsaufbau, d.h. beim Verbinden eines Hörgeräts mit einem oder mehreren anderen Hörgeräten, kommt es unter Umständen zu Datenkollisionen oder fehlerhaften Übertragungen. Mehrere Hörgeräte senden auf einem vorgegebenen Kanal, d.h. insbesondere Frequenzband, des Netzwerks. Dieser Kanal weist oftmals eine begrenzte Bandbreite auf. Es besteht also ein Bedarf, dass Netzwerk möglichst eindeutig zu organisieren und jedem teilnehmenden Hörgerät eine definierte Rolle zuzuweisen.

In dem vorliegenden Netzwerk wird daher einem der Hörgeräte die Rolle eines Masters zugewiesen, welcher den Datenaustausch im gesamten Netzwerk steuert und somit koordiniert. Allen übrigen Hörgeräten wird dagegen jeweils die Rolle eines Slaves zugewiesen, welcher den Datenaustausch gerade nicht steuert, sondern von einer Steuerung durch den Master abhängig ist. Diese Rollenverteilung wird vorgenommen, sobald wenigstens zwei Hörgeräte zusammenfinden. Beispielsweise sendet ein jeweiliges Hörgerät regelmäßig ein Suchsignal aus, welches von einem anderen Hörgerät empfangen und bestätigt wird, sodass bei gegenseitigem Empfang und Bestätigung zwei Hörgeräte voneinander Kenntnis erlangen und dann spontan und insbesondere automatisch ein Netzwerk bilden. Analoges gilt beim Beitritt eines Hörgeräts zu einem bestehenden Netzwerk.

Speziell bei der Neubildung eines Netzwerks, aber unter Umständen auch bei einer Änderung der Zusammensetzung des Netzwerks, muss nun entschieden werden, welches Hörgerät im Netzwerk den Datenaustausch steuert und somit die Organisation und Kontrolle übernimmt. Mit anderen Worten: eines der Hörgeräte muss als Master ausgewählt werden. Diese Auswahl kann grundsätzlich willkürlich vorgenommen werden, beispielsweise mittels einer Zufallszahl, welche von einem jeweiligen Hörgerät generiert wird und mit der Zufallszahl der anderen Hörgeräte verglichen wird. Vorliegend wird jedoch gezielt eine spezielle Auswahl getroffen, welche einen verbesserten Betrieb des Netzwerks und somit einen besonders zuverlässigen Datenaustausch gewährleistet. Vorliegend wird nämlich in dem Netzwerk dasjenige Hörgerät als Master ausgewählt, welches hierzu die höchste Befähigung aufweist. Diese Befähigung wird ausgedrückt durch die Betriebsfähigkeit eines jeweiligen Hörgeräts im Vergleich zur Betriebsfähigkeit der anderen Hörgeräte. Die Betriebsfähigkeit gibt an, wie sicher und zuverlässig der Betrieb des Hörgeräts zum gegebenen Zeitpunkt ist und vorzugsweise auch, wie sicher und zuverlässig der Betrieb des Hörgeräts zukünftig voraussichtlich ist. Dadurch wird sichergestellt, dass der Datenaustausch vom hierfür fähigsten Hörgerät gesteuert wird.

Die Betriebsfähigkeit des Hörgeräts wird insbesondere aus einem Betriebsparameter des Hörgeräts abgeleitet. Der Betriebsparameter ist eine Größe, welche sich im Betrieb des Hörgeräts typischerweise dynamisch verändert und dadurch einen bestimmten Zustand des Hörgeräts zu einem gegebenen Zeitpunkt anzeigt. Der Betriebsparameter quantifiziert insbesondere eine betriebsrelevante Eigenschaft des Hörgeräts oder einer Komponente des Hörgeräts. Der Betriebsparameter ist dabei unmittelbar oder mittelbar auch ein Maß für die aktuelle und/oder zukünftige Leistungsfähigkeit des Hörgeräts hinsichtlich dessen Funktionalität im Netzwerk. Dadurch ist der Betriebsparameter besonders geeignet, um festzustellen, ob das Hörgerät als Master geeignet ist oder ob ein anderes Hörgerät geeigneter ist.

In einer besonders vorteilhaften Ausgestaltung wird die Betriebsfähigkeit anhand eines Ladezustands eines Energiespeichers des Hörgeräts bestimmt, sodass das Hörgerät als Master am Netzwerk teilnimmt, wenn der Ladezustand des Hörgeräts größer ist als der Ladezustand aller anderen Hörgeräte im Netzwerk, und ansonsten als Slave. Dadurch wird sichergestellt, dass das Hörgerät mit der größten Energiereserve den Datenaustausch steuert, wodurch ein möglichst langer Betrieb des Netzwerks sichergestellt ist. Der Ladezustand ist ein Betriebsparameter des Hörgeräts. Im Betrieb des Hörgeräts verringert sich der Ladezustand zunehmend dadurch, dass das Hörgerät eine oder mehrere Funktionen ausführt, z.B. eine Modifikation in einer Signalverarbeitung oder eine Ausgabe von Schall über einen Hörer. Speziell als Master ist typischerweise -jedoch nicht zwingend - davon auszugehen, dass der Energieverbrauch aufgrund der zusätzlichen Funktion der Steuerung des Datenaustauschs zunimmt und der Ladezustand sich entsprechend schneller reduziert im Vergleich zur Rolle als Slave. Daher ist es zweckmäßig das Hörgerät mit dem höchsten Ladezustand als Master auszuwählen.

In einer vorteilhaften Ausgestaltung wird die Betriebsfähigkeit anhand einer Übertragungsqualität des Hörgeräts bezüglich des Sendens und/oder Empfanges von Daten über das Netzwerk bestimmt, sodass das Hörgerät als Master am Netzwerk teilnimmt, wenn die Übertragungsqualität des Hörgeräts größer ist als die Übertragungsqualität aller anderen Hörgeräte im Netzwerk, und ansonsten als Slave. Dadurch wird sichergestellt, dass das Hörgerät, welches die beste Übertragungsqualität, d.h. Sendequalität oder Empfangsqualität oder beides, aufweist den Datenaustausch steuert. Die Übertragungsqualität ist beispielsweise quantifiziert durch eine durchschnittliche Signalstärke, mit welcher das Hörgerät Daten von anderen Hörgeräten empfängt oder an diese sendet oder beides. Die Übertragungsqualität ist beispielsweise abhängig von der Position eines Hörgeräts relativ zu den anderen Hörgeräten und möglicherweise vorhandenen Hindernissen. Weiter ist die Übertragungsqualität beispielsweise abhängig vom Typ und Aufbau einer Antenne des Hörgeräts, welche zum Senden und/oder Empfangen beim Datenaustausch verwendet wird.

In einer vorteilhaften Ausgestaltung wird die Betriebsfähigkeit anhand einer Fehlerrate beim Datenaustausch bestimmt, sodass das Hörgerät als Master am Netzwerk teilnimmt, wenn die Fehlerrate des Hörgeräts geringer ist als die Fehlerrate aller anderen Hörgeräte im Netzwerk, und ansonsten als Slave. Dadurch wird sichergestellt, dass der Datenaustausch möglichst fehlerfrei erfolgt. Eine hohe Fehlerrate erfordert ein häufiges Neusenden von Daten, also eine redundante Übertragung, was entsprechend ineffizient ist. Daher wird das Hörgerät mit der geringsten Fehlerrate als Master ausgewählt. Dies ist auch vorteilhaft, falls ein Nutzer, dessen Hörgerät momentan der Master ist, sich entfernt und das Netzwerk verlassen möchte, in welchem Fall die Fehlerrate automatisch ansteigt, sodass entsprechend automatisch ein neuer Master ausgewählt wird. Die Fehlerrate ist beispielsweise eine sogenannte "bit error rate". Ähnlich der Übertragungsqualität ist die Fehlerrate beispielsweise abhängig von der Position eines Hörgeräts relativ zu den anderen Hörgeräten und speziell von der Entfernung zu den anderen Hörgeräten.

Vorteilhaft ist auch eine Kombination mehrerer der vorgenannten Konzepte zur Bestimmung der Betriebsfähigkeit miteinander, sodass diese abhängig von mehreren verschiedenen Betriebsparametern eines Hörgeräts bestimmt wird. Beispielsweise werden dabei die unterschiedlichen Betriebsparameter mit unterschiedlicher Priorität berücksichtigt.

Vorzugweise wird das Hörgerät, d.h. das Ego-Hörgerät, als neuer Master des Netzwerks ausgewählt, wenn das Hörgerät dem Netzwerk beitritt und dieses bereits einen alten Master aufweist, dessen Betriebsfähigkeit jedoch schlechter ist als die Betriebsfähigkeit des Hörgeräts, sodass der alte Master fortan als Slave am Netzwerk teilnimmt. Ist dagegen die Betriebsfähigkeit des Ego-Hörgeräts schlechter als die des alten Masters, bleibt dieser der Master des Netzwerks und das Ego-Hörgerät nimmt als Slave teil.

Für den Fall, dass das Hörgerät, d.h. das Ego-Hörgerät, bereits als Master an dem Netzwerk teilnimmt und ein neues Hörgerät dem Netzwerk beitritt, wird vorzugsweise erneut entschieden, ob das Hörgerät als Master oder als Slave an dem Netzwerk teilnimmt. Dies entspricht im Wesentlichen dem zuvor geschilderten Fall des Beitritts des Ego-Hörgeräts zu einem Netzwerk, nun jedoch aus einer anderen Perspektive, in welcher das Ego-Hörgerät bereits am Netzwerk teilnimmt und ein neuer, potentiell fähigerer Teilnehmer beitritt. Falls das neue Hörgerät eine höhere Betriebsfähigkeit aufweist, wird an dieses die Rolle des Masters abgetreten, ansonsten tritt das neue Hörgerät als Slave bei.

Für den Fall, dass das Hörgerät, d.h. das Ego-Hörgerät, bereits als Slave an dem Netzwerk teilnimmt und der Master das Netzwerk verlässt, wird vorzugsweise ebenfalls erneut entschieden, ob das Hörgerät als Master oder als Slave an dem Netzwerk teilnimmt. Falls das Ego-Hörgerät nach einem Austritt des bisherigen Masters im Netzwerk die höchste Betriebsfähigkeit aufweist, übernimmt das Ego-Hörgerät die Rolle des Masters. Andernfalls wird dasjenige der anderen Hörgeräte als Master ausgewählt, welches die höchste Betriebsfähigkeit aufweist.

Die vorstehend beschriebenen Mechanismen für die Fälle eines Austritts oder Beitritts eines Hörgeräts stellen jeweils sicher, dass im Netzwerk immer dasjenige Hörgerät mit der höchsten Betriebsfähigkeit die Steuerung des Datenaustauschs übernimmt und als Master ausgewählt wird oder bleibt, sodass selbst bei einer dynamischen Änderung der Zusammensetzung des Netzwerks ein optimaler Datenaustausch gewährleistet ist.

Ein Suchmodus des Hörgeräts ist aktiviert, falls dieses gerade nicht an einem Netzwerk teilnimmt, wobei das Hörgerät im Suchmodus vorzugsweise wiederkehrend ein Suchsignal aussendet, welches die Betriebsfähigkeit des Hörgeräts, d.h. eines ersten Hörgeräts, enthält, sodass diese von einem anderen Hörgerät, d.h. einem zweiten Hörgerät, empfangbar ist und mit dessen Betriebsfähigkeit vergleichbar ist. Mit anderen Worten: während das Hörgerät noch nicht an einem Netzwerk teilnimmt, ist ein Suchmodus aktiviert, in welchem das Hörgerät ein oder mehrere andere Hörgeräte sucht, um mit diesen ein Netzwerk zu bilden oder einem bereits bestehenden Netzwerk beizutreten. Im Suchmodus sendet das Hörgerät wiederkehrend ein Suchsignal aus. Das Suchsignal ist vorzugsweise ein elektromagnetisches Funksignal. Das Suchsignal ist vorzugsweise ein Datensignal, enthält also Informationen des Hörgeräts oder über das Hörgerät oder beides. Vorliegend enthält das Suchsignal die Betriebsfähigkeit des Hörgeräts. Dies ist jedoch für die bloße Teilnahme am Netzwerk nicht zwingend, hierzu ausreichend ist vielmehr bereits, wenn das Suchsignal ein einfaches Erkennungssignal, z.B. eine Identifikationsnummer oder einfach ein Testsignal ist. Sofern aber wie hier beschrieben die eigene Betriebsfähigkeit im Suchmodus ausgesendet wird, kann ein anderes Hörgerät diese empfangen und mit dessen Betriebsfähigkeit vergleichen.

Umgekehrt hört das Hörgerät im Suchmodus zweckmäßigerweise, ob ein oder mehrere andere Hörgeräte in Reichweite sind und empfängt gegebenenfalls deren Suchsignale, insbesondere um die jeweilige Betriebsfähigkeit der anderen Hörgeräte mit der eigenen Betriebsfähigkeit zu vergleichen. Im Suchmodus sind das Hören und das Senden grundsätzlich unabhängig voneinander, sodass das Hörgerät im Suchmodus also hört oder sendet oder beides. Die beiden Funktionen Hören und Senden im Suchmodus werden zweckmäßigerweise auf unterschiedliche Weise aktiviert und nicht zwingend gemeinsam.

Der Suchmodus wird bevorzugterweise dadurch aktiviert, dass das Hörgerät Sprache erkennt, d.h. das Vorhandensein von Sprache in der aktuellen Umgebung. Die Erkennung erfolgt insbesondere dadurch, dass ein Mikrofon des Hörgeräts Schall aus der Umgebung aufnimmt und daraus ein elektrisches Eingangssignal erzeugt, welches einer Analyseeinheit zugeführt wird, welche z.B. ein Teil der Signalverarbeitung ist. In einer möglichen Anwendungssituation finden wenigstens zwei Nutzer von Hörgeräten spontan zusammen und beginnen eine Konversation. Die Hörgeräte der Nutzer sind dabei noch nicht miteinander gekoppelt, bilden also noch kein gemeinsames Netzwerk. Vorzugsweise wird nun der Suchmodus eines jeweiligen Hörgeräts dadurch ausgelöst, dass dieses über dessen Mikrofon Sprache erkennt, z.B. die Stimme des Nutzers des Hörgeräts oder die Stimme einer anderen Person. Erkennt das Hörgerät, nachfolgend das erste Hörgerät, die Stimme seines zugeordneten Nutzers, z.B. mittels einer Eigenstimmenerkennung des Signalverarbeitung, dann sendet dieses Hörgerät ein Suchsignal aus, welches insbesondere auch die Betriebsfähigkeit des Hörgeräts enthält, und sucht nach anderen Hörgeräten in der Umgebung, potentiell dem Hörgerät eines Gesprächspartners des Nutzers. Alternativ oder zusätzlich ist es auch denkbar und geeignet, wenn ein Hörgerät ein Suchsignal aussendet, sobald es eine Stimme erkennt, welche gerade nicht die Stimme des zugeordneten Nutzers ist, d.h. eine fremde Stimme.

Sofern der andere Nutzer ebenfalls ein Hörgerät, nachfolgend das zweite Hörgerät, trägt, befindet sich dieses geeigneterweise ebenfalls im Suchmodus und hört dabei, ob sich ein Hörgerät in der Nähe befindet. Dabei hört das zweite Hörgerät das Suchsignal des ersten Hörgeräts. Insbesondere erfasst das zweite Hörgerät auch die Betriebsfähigkeit des ersten Hörgeräts und vergleicht diese mit der eigenen Betriebsfähigkeit, welche zweckmäßigerweise ebenfalls ausgesendet wird, nämlich als ein Antwortsignal, um vom ersten Hörgerät empfangen zu werden und gleichfalls mit der eigenen Betriebsfähigkeit verglichen zu werden. Auf diese Weise bestimmen beide Hörgeräte, welches als Master und welches als Slave ausgewählt wird. Daraufhin wird ein gemeinsames Netzwerk mit der entsprechenden Rollenverteilung gebildet. Alternativ sendet das zweite Hörgerät seine Betriebsfähigkeit nicht selbst an das erste Hörgerät, sondern ermittelt allein die Rollenverteilung und teilt diese dann mittels eines Antwortsignals dem ersten Hörgerät mit, sodass dieses die beiden Betriebsfähigkeiten nicht miteinander vergleichen muss, sondern direkt seine Rolle mitgeteilt bekommt. Im nun gebildeten Netzwerk steuert der Master den Datenaustausch und übernimmt somit die Koordination der Datenkommunikation.

Kommt ein weiterer Nutzer mit einem dritten Hörgerät hinzu, so befindet sich dieses zunächst auch im Suchmodus und erkennt das bereits vorhandene Netzwerk. Aus den Daten, welche im Netzwerk zwischen dem ersten und dem zweiten Hörgerät ausgetauscht werden, erkennt das dritte Hörgerät, welches Hörgerät der Master ist und meldet sich dann bei diesem an. In einer zweckmäßigen Ausgestaltung wird dann wie bereits beschrieben geprüft, ob das dritte Hörgerät nunmehr die Rolle als Master übernimmt oder als Slave am Netzwerk teilnimmt.

Der Master im Netzwerk führt vorzugsweise eine Teilnehmerliste, in welcher alle aktuellen Teilnehmer am Netzwerk verzeichnet sind.

Vorzugsweise überwacht der Master auch wiederkehrend die jeweilige Betriebsfähigkeit jedes Hörgeräts im Netzwerk und übergibt gegebenenfalls die Steuerung des Datenaustauschs an einen geeigneteren Teilnehmer, wie bereits oben beschrieben wurde.

Die Daten, welche beim Datenaustausch über das Netzwerk ausgetauscht werden, sind in einer geeigneten Ausgestaltung Audiodaten, d.h. die Sprache der Nutzer. Die Audiodaten werden dadurch gewonnen, dass ein jeweiliges Hörgerät die Sprache des zugeordneten Nutzers aufnimmt. Diese aufgenommene Sprache wird dann über das Netzwerk an die anderen Hörgeräte übermittelt. Dabei ist dann mittels des Netzwerks eine Art Telefonverbindung der Hörgeräte realisiert. Dies ist vorteilhaft in lauten oder gestörten Umgebungen, in welchen die Übertragung von Schall durch die Luft und das Verstehen von direkter Sprache schwierig sind. Alternativ oder zusätzlich sind die Daten Steuerdaten für die Hörgeräte im Netzwerk oder sonstige Informationen.

Bevorzugterweise ist das Netzwerk ein dezentrales und relaisfreies Netzwerk, in welchem die Hörgeräte direkt miteinander verbunden sind. Dabei sind die Hörgeräte nach Art eines Peer-to-Peer-Netzwerkes miteinander verbunden, mit dem Unterschied, dass eines der Hörgeräte als Master den Datenaustausch steuert. Auf zusätzliche Geräte, welche nicht Hörgeräte sind, wird dagegen wenigstens zum Datenaustausch der Hörgeräte untereinander verzichtet. Vielmehr erfolgt der Datenaustausch unmittelbar zwischen den Hörgeräten und somit nicht über zusätzliche Relaisstationen, Hubs, Router oder dergleichen. Das Netzwerk ist somit ein echtes Hörgeräte-Netzwerk. Die Verwendung zusätzlicher Geräte, welche nicht Hörgeräte sind, ist jedoch an sich auch vorteilhaft.

Vorzugsweise ist das Netzwerk ein drahtloses Netzwerk. Dies bedeutet, dass ein jeweiliges Hörgerät zum Datenaustausch eine entsprechende Drahtlosschnittstelle aufweist, z.B. eine WLAN-, Bluetooth- oder Funk-Antenne.

Das Netzwerk ist entweder ein öffentliches oder ein privates Netzwerk. Bei einem öffentlichen Netzwerk ist im Gegensatz zu einem privaten Netzwerk keine Authentifizierung notwendig.

Ein offenes Netzwerk mit mehreren Hörgeräten wird vorzugsweise automatisch aufgebaut, sobald sich mehrere Hörgeräte in geeigneter Reichweite zueinander befinden. Die Reichweite, ab welcher ein automatischer Verbindungsaufbau erfolgt bestimmt sich insbesondere durch die Übertragungsreichweite der Hörgeräte. Über ein offenes Netzwerk werden zweckmäßigerweise lediglich nicht-sensible Daten ausgetauscht, z.B. zum Abgleichen von Parametern oder Einstellungen der Hörgeräte oder zur gemeinsamen Sammlung von Daten, speziell Umgebungsdaten. Vorteilhaft ist auch eine Einbindung eines oder mehrerer sogenannter Informations-Hotspots als weitere Teilnehmer des Netzwerks. Einem Informations-Hotspot ist kein aktiver Nutzer des Netzwerks zugeordnet, vielmehr handelt es sich vorzugsweise um fest installierte Hardware, über welche Informationen zwischen den Hörgeräten austauschbar sind, z.B. allgemeine Informationen über eine Ort, beispielsweise einen Bahnhof. Alternativ oder zusätzlich wird über einen Informations-Hotspot bei Bedarf ein Notruf gesendet. Vorteilhafterweise wird ein Informations-Hotspot alternativ oder zusätzlich zur Vergrößerung der Übertragungsreichweite der Hörgeräte verwendet, d.h. sozusagen als Relais für den Datenaustausch.

Ein privates Netzwerk wird auch als geschlossenes Netzwerk bezeichnet. Bei einem solchen Netzwerk stellt sich die Herausforderung, dass die Teilnehmer explizit festgelegt werden müssen, da nicht unbedingt jedes mögliche Hörgerät in Reichweite auch tatsächlich an dem privaten Netzwerk teilnehmen soll. Daher wird zur Teilnahme eines Hörgeräts am Netzwerk eine Authentifizierung durchgeführt. Dies erfolgt in einer vorteilhaften Ausgestaltung mittels eines Teilnehmerverzeichnisses. In dem Teilnehmerverzeichnis sind in einer geeigneten Ausgestaltung ein oder mehrere Kontakte hinterlegt, wobei jeder Kontakt mit einem Hörgerät korrespondiert, sodass das Teilnehmerverzeichnis sozusagen ein Telefonbuch ist. Ein jeweiliges Hörgerät ist nun derart ausgebildet, dass für dessen Nutzer anhand des Teilnehmerverzeichnisses diejenigen Hörgeräte auswählbar sind, mit welchen der Nutzer sein eigenes Hörgerät in einem gemeinsamen, privaten Netzwerk verbinden will, sobald sich diese in Reichweite befinden. Alternativ oder zusätzlich enthält das Teilnehmerverzeichnis alle aktuell in Reichweite befindlichen Hörgeräte. Der Nutzer eines Hörgeräts erteilt dann anhand des Teilnehmerverzeichnisses einem in Reichweite befindlichen Hörgerät die Erlaubnis, sich mit dem eigenen Hörgerät in einem gemeinsamen, privaten Netzwerk zu verbinden.

Vorteilhaft ist auch eine Ausgestaltung, bei welcher in einem Netzwerkverzeichnis alle aktuell verfügbaren Netzwerke angezeigt werden, sodass der Nutzer mittels einer aktiv gestellten Anfrage an eines der Netzwerke das eigene Hörgerät mit den Hörgeräten dieses Netzwerks verbinden kann. Die Anfrage wird von einem Teilnehmer des Netzwerks angenommen oder abgelehnt, z.B. von einem beliebigen Nutzer eines Hörgeräts des Netzwerks oder von einem Gruppenadministrator.

Alternativ oder zusätzlich zur Annahme oder Ablehnung einer Anfrage übernimmt ein Gruppenadministrator zweckmäßigerweise eine oder mehrere andere Funktionen, beispielsweise eine Erstellung einer Gruppe von Nutzern, welche dem Netzwerk insbesondere automatisch beitreten dürfen, eine Auflösung einer Gruppe von Nutzern oder ein Hinzufügen oder Ausschließen einzelner Nutzer zu bzw. aus einer Gruppe.

Vorteilhaft ist auch eine Ausgestaltung, bei welcher eine Bewertung von Teilnehmer möglich ist, spezieller eine Bewertung der einzelnen Nutzer der Hörgeräte in einem Netzwerk. Sollte ein Nutzer ein inakzeptables Verhalten zeigen, können die übrigen Nutzer im Netzwerk diesen Nutzer entsprechend negativ bewerten und diesen dadurch ausschließen oder die Bedingungen für einen erneuten Beitritt erschweren oder einen zukünftigen Beitritt vollständig verbieten. Dadurch wird vorteilhaft ein adäquates Benehmen der Nutzer im Netzwerk gewährleistet.

Ein erfindungsgemäßes Hörgerät ist ausgebildet zur Durchführung eines Verfahrens wie vorstehend beschrieben. Hierzu weist das Hörgerät zweckmäßigerweise eine Steuereinheit auf, welche derart ausgebildet ist, dass diese das entsprechende Verfahren ausführt. In der Steuereinheit ist das Verfahren insbesondere programmtechnisch oder schaltungstechnisch realisiert oder eine Kombination hiervon. Beispielswiese ist die Steuereinheit hierfür als ein Mikroprozessor oder als ein ASIC ausgebildet oder als eine Kombination hiervon.

Das Hörgerät ist vorzugsweise ein binaurales Hörgerät und weist dann zwei Einzelgeräte auf, welche vom Nutzer auf unterschiedlichen Seiten getragen werden, also jeweils im oder am linken und rechten Ohr.

Das Hörgerät dient vorzugsweise zur Versorgung eines hörgeschädigten Nutzers. Hierzu weist das Hörgerät ein Mikrofon auf, welches Schall aus der Umgebung aufnimmt und ein elektrisches Eingangssignal erzeugt. Dieses wird zur Modifikation einer Signalverarbeitung des Hörgeräts zugeführt. Die Modifikation erfolgt insbesondere anhand eines individuellen Audiogramms des Nutzers, welcher dem Hörgerät zugeordnet ist, sodass ein individuelles Hördefizit des Nutzers ausgeglichen wird. Die Signalverarbeitung gibt als Ergebnis ein elektrisches Ausgangssignal aus, welches dann über einen Hörer des Hörgeräts wieder in Schall umgewandelt wird und an den Nutzer ausgegeben wird.

Die Aufgabe wird auch gelöst durch ein Verfahren zum Betrieb eines Netzwerks mit mehreren Hörgeräten, welche unterschiedlichen Nutzern zugeordnet sind, wobei eines der Hörgeräte als ein Master ausgewählt wird, zur Steuerung eines Datenaustauschs zwischen den Hörgeräten, und wobei alle anderen Hörgeräte jeweils als ein Slave ausgewählt werden, wobei dasjenige Hörgerät als Master ausgewählt wird, welches im Vergleich zu den anderen Hörgeräten die höchste Betriebsfähigkeit aufweist. Die Auswahl des Masters erfolgt entweder während das Netzwerk neu gebildet wird oder während dieses bereits besteht. Die obigen Ausführungen zum Verfahren und zum Hörgerät gelten sinngemäß auch für das Netzwerk und die Hörgeräte, welche an diesem Netzwerk teilnehmen oder teilnehmen sollen.

Nachfolgend werden Ausführungsbeispiele der Erfindung anhand einer Zeichnung näher erläutert. Darin zeigen jeweils schematisch:
- Fig. 1: ein Hörgerät,
- Fig. 2: zwei Nutzer mit Hörgeräten,
- Fig. 3: die Nutzer aus Fig. 2, wobei deren Hörgeräte ein Netzwerk bilden,
- Fig. 4: das Netzwerk aus Fig. 3, an welchem ein drittes Hörgerät teilnimmt.

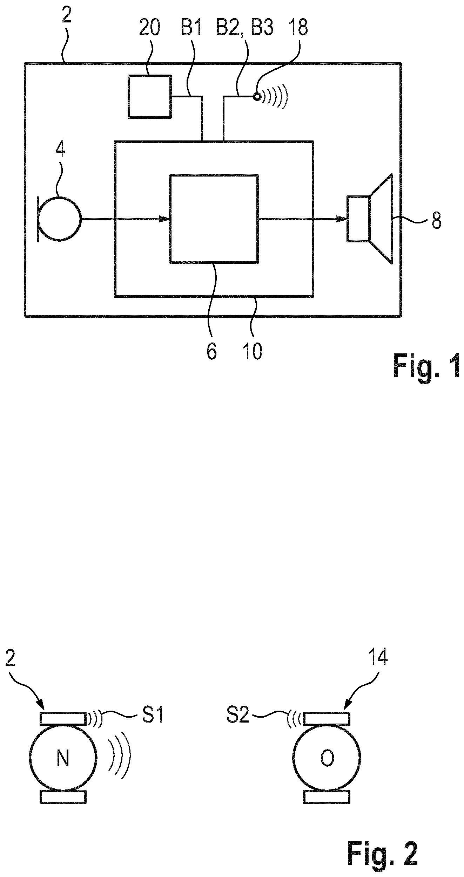

In Fig. 1 ist ein Hörgerät 2 gezeigt, welches hier speziell zur Versorgung eines hörgeschädigten Nutzers N dient. Hierzu weist das Hörgerät 2 ein Mikrofon 4 auf, welches Schall aus der Umgebung aufnimmt und ein elektrisches Eingangssignal erzeugt. Dieses wird zur Modifikation einer Signalverarbeitung 6 des Hörgeräts 2 zugeführt. Die Modifikation erfolgt vorliegend anhand eines individuellen Audiogramms des Nutzers N, welcher dem Hörgerät 2 zugeordnet ist, sodass ein individuelles Hördefizit des Nutzers N ausgeglichen wird. Die Signalverarbeitung 6 gibt als Ergebnis ein elektrisches Ausgangssignal aus, welches dann über einen Hörer 8 des Hörgeräts 2 wieder in Schall umgewandelt wird und an den Nutzer N ausgegeben wird.

Das Hörgerät 2 weist weiterhin eine Steuereinheit 10 auf, welche derart ausgebildet ist, dass diese ein Verfahren zum Betrieb des Hörgeräts 2 ausführt, für welches ein Beispiel nachfolgend anhand der Fig. 2 bis 4 beschrieben wird. Dabei nimmt das Hörgerät 2 als Master oder als Slave an einem Netzwerk 12 teil, zum Datenaustausch mit anderen Hörgeräten 14, 16, welche anderen Nutzern O, P zugeordnet sind. Das beispielhaft gezeigte Netzwerk 12 ist ein drahtloses Netzwerk 12. Dies bedeutet, dass ein jeweiliges Hörgerät 2, 14, 16 zum Datenaustausch eine entsprechende Drahtlosschnittstelle 18 aufweist, z.B. eine WLAN-, Bluetooth- oder Funk-Antenne.

Die in den Fig. 2 bis 4 gezeigten Hörgeräte 2, 14, 16 sind jeweils ein binaurales Hörgerät und weisen dann jeweils zwei Einzelgeräte auf, welche vom jeweiligen Nutzer N, O, P auf unterschiedlichen Seiten getragen werden, also jeweils im oder am linken und rechten Ohr. Ein einzelnes Einzelgerät ist beispielsweise wie in Fig. 1 gezeigt ausgebildet.

Bei einem Verfahren zum Betrieb des Hörgeräts 2, welches auch als Ego-Hörgerät 2 bezeichnet wird, ist dieses einem Nutzer N zugeordnet und wird oder ist mit einem oder mehreren anderen Hörgeräten 14, 16, welche jeweils einem anderen Nutzer O, P zugeordnet sind, zum Datenaustausch in einem gemeinsamen Netzwerk 12 verbunden. Das Hörgerät 2 oder eines der anderen Hörgeräte 14, 16 steuert den Datenaustausch, indem dieses als ein Master an dem Netzwerk 12 teilnimmt. Alle übrigen Hörgeräte 2, 14, 16 nehmen jeweils als ein Slave an dem Netzwerk 12 teil. Dabei wird entschieden, ob das Hörgerät 2 als Master oder als Slave an dem Netzwerk 12 teilnimmt, indem eine Betriebsfähigkeit dieses Hörgeräts 2 bestimmt wird und mit der Betriebsfähigkeit der jeweils anderen Hörgeräte 14, 16 verglichen wird. Das Hörgerät 2 nimmt dann als Master teil, falls das Hörgerät 2 die höchste Betriebsfähigkeit aufweist, und ansonsten als Slave. Das Hörgerät 2 tritt also einem bestehenden Netzwerk 12 bei oder bildet mit einem mehreren anderen Hörgeräten 14, 16 ein neuen Netzwerk 12, sodass dem Hörgerät 2 nunmehr eine Rolle zugewiesen werden muss, entweder Master oder Slave. Diese Zuweisung erfolgt abhängig von der Betriebsfähigkeit des Hörgeräts 2 relativ zu den anderen Hörgeräten 14, 16, mit welchen eine Verbindung über das Netzwerk 12 hergestellt werden soll. Die Betriebsfähigkeit gibt an, wie sicher und zuverlässig der Betrieb des Hörgeräts 2 zum gegebenen Zeitpunkt ist und vorzugsweise auch, wie sicher und zuverlässig der Betrieb des Hörgeräts 2 zukünftig voraussichtlich ist. Dadurch wird sichergestellt, dass der Datenaustausch vom hierfür fähigsten Hörgerät 2, 14, 16 gesteuert wird.

Die Betriebsfähigkeit des Hörgeräts wird aus einem Betriebsparameter B des Hörgeräts 2 abgeleitet. Der Betriebsparameter B1, B2, B3 ist eine Größe, welche sich im Betrieb des Hörgeräts 2 dynamisch verändert und dadurch einen bestimmten Zustand des Hörgeräts 2 anzeigt. Der Betriebsparameter B1, B2, B3 ist dabei unmittelbar oder mittelbar auch ein Maß für die aktuelle und/oder zukünftige Leistungsfähigkeit des Hörgeräts 2 hinsichtlich dessen Funktionalität im Netzwerk 12.

Beispielsweise wird die Betriebsfähigkeit anhand eines Ladezustands B1 eines Energiespeichers 20 des Hörgeräts 2 bestimmt, sodass das Hörgerät 2 als Master am Netzwerk 12 teilnimmt, wenn der Ladezustand B1 des Hörgeräts 2 größer ist als der Ladezustand B1 aller anderen Hörgeräte 14, 16 im Netzwerk 12, und ansonsten als Slave. Der Ladezustand B1 ist ein Betriebsparameter B1 des Hörgeräts 2.

Alternativ oder zusätzlich wird die Betriebsfähigkeit anhand einer Übertragungsqualität B2 des Hörgeräts 2 bezüglich des Sendens und/oder Empfanges von Daten über das Netzwerk 12 bestimmt, sodass das Hörgerät 2 als Master am Netzwerk 12 teilnimmt, wenn die Übertragungsqualität B2 des Hörgeräts 2 größer ist als die Übertragungsqualität B2 aller anderen Hörgeräte 14, 16 im Netzwerk 12, und ansonsten als Slave. Dadurch wird sichergestellt, dass das Hörgerät 2, welches die beste Sendequalität oder Empfangsqualität oder beides aufweist den Datenaustausch steuert. Die Übertragungsqualität B2 ist beispielsweise eine durchschnittliche Signalstärke, mit welcher das Hörgerät 2 über die Drahtlosschnittstelle 20 Daten von den anderen Hörgeräten 14, 16 empfängt oder an diese sendet oder beides. Die Übertragungsqualität B2 ist ein Betriebsparameter B2 des Hörgeräts 2.

Alternativ oder zusätzlich wird die Betriebsfähigkeit anhand einer Fehlerrate B3 beim Datenaustausch bestimmt, sodass das Hörgerät 2 als Master am Netzwerk 12 teilnimmt, wenn die Fehlerrate B3 des Hörgeräts 2 geringer ist als die Fehlerrate B3 aller anderen Hörgeräte 14, 16 im Netzwerk 12, und ansonsten als Slave. Die Fehlerrate B3 ist ein Betriebsparameter B3 des Hörgeräts 2 und ist beispielsweise eine sogenannte "bit error rate".

Die Anwendung des speziellen Konzepts zur Auswahl des Masters anhand der Betriebsfähigkeit der Hörgeräte 2, 14, 16 wird aus dem beispielhaften Anwendungsfall der Fig. 2 bis 4 deutlich.

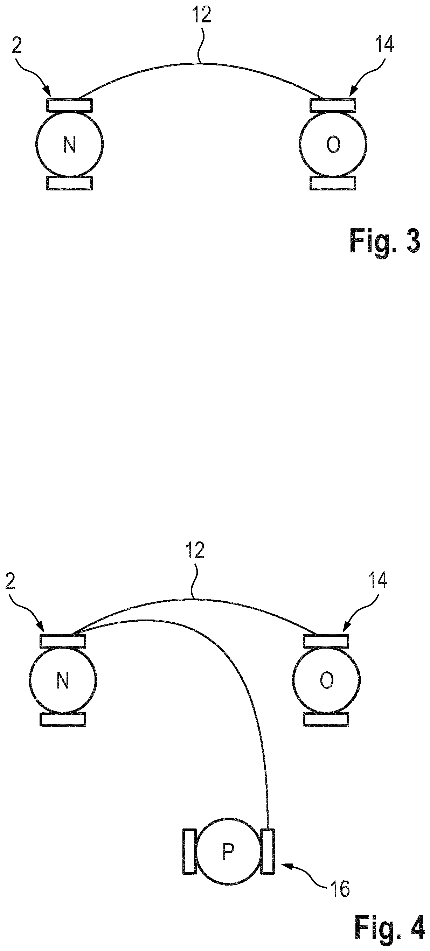

In Fig. 2 ist eine mögliche Ausgangssituation gezeigt, bei welcher zwei Nutzer N, O von Hörgeräten 2, 14 spontan zusammenfinden und eine Konversation beginnen. Die Hörgeräte 2, 14 sind dabei noch nicht miteinander gekoppelt, bilden also noch kein gemeinsames Netzwerk 12. Daher ist jeweils ein Suchmodus aktiviert, in welchem das jeweilige Hörgerät 2, 14 ein oder mehrere andere Hörgeräte 2, 14, 16 sucht, um mit diesen wie in Fig. 3 gezeigt ein Netzwerk 12 zu bilden oder wie in Fig. 4 gezeigt einem bereits bestehenden Netzwerk 12 beizutreten.

Im Suchmodus sendet das Hörgerät 2, 14, 16 wiederkehrend ein Suchsignal aus, welches vorliegend auch die Betriebsfähigkeit des Hörgeräts 2, 14, 16 enthält, sodass diese von einem anderen Hörgerät 2, 14, 16 mit dessen Betriebsfähigkeit verglichen werden kann. Umgekehrt hört das Hörgerät 2, 14, 16 im Suchmodus, ob ein oder mehrere andere Hörgeräte 2, 14, 16 in Reichweite sind und empfängt gegebenenfalls deren Suchsignale S1, um die jeweilige Betriebsfähigkeit der anderen Hörgeräte mit der eigenen Betriebsfähigkeit zu vergleichen. Im Suchmodus sind das Hören und das Senden grundsätzlich unabhängig voneinander aktivierbar, sodass das Hörgerät 2, 14, 16 im Suchmodus also hört oder sendet oder beides.

In Fig. 2 wird nun der Suchmodus der Hörgeräte 2, 14 dadurch ausgelöst, dass diese über deren Mikrofone 4 die Stimmen der Nutzer N, O erkennen. Vorliegend erkennt das erste Hörgerät 2 die Stimme seines zugeordneten Nutzers N, z.B. mittels einer nicht explizit gezeigten Eigenstimmenerkennung als Teil der Steuereinheit 10. Daraufhin sendet das Hörgerät 2 ein Suchsignal S1 aus, welches auch die Betriebsfähigkeit des Hörgeräts 2 enthält, und sucht nach anderen Hörgeräten 14, 16 in der Umgebung, potentiell dem Hörgerät 14 eines Gesprächspartners, hier des Nutzers O. In einer nicht gezeigten Ausführungsform sendet alternativ oder zusätzlich das Hörgerät 2 ein Suchsignal S1 aus, sobald es eine Stimme erkennt, welche gerade nicht die Stimme des zugeordneten Nutzers N ist, d.h. eine fremde Stimme, z.B. diejenige des Nutzers O.

Im Ausführungsbeispiel der Fig. 2 trägt der andere Nutzer O ebenfalls ein Hörgerät 14, nämlich das zweite Hörgerät 14. Dieses befindet sich ebenfalls im Suchmodus und hört dabei, ob sich ein Hörgerät 2, 16 in der Nähe befindet. Dabei hört das zweite Hörgerät 14 das Suchsignal S1 des ersten Hörgeräts 2, erfasst dadurch die Betriebsfähigkeit des ersten Hörgeräts 2 und vergleicht diese mit der eigenen Betriebsfähigkeit. Diese wird in einer möglichen Ausgestaltung als ein Antwortsignal S2 ausgesendet, um von ersten Hörgerät 2 empfangen zu werden und gleichfalls mit der eigenen Betriebsfähigkeit verglichen zu werden. Auf diese Weise bestimmen beide Hörgeräte 2, 14, welches als Master und welches als Slave ausgewählt wird. Daraufhin wird wie in Fig. 3 dargestellt ein gemeinsames Netzwerk 12 mit der entsprechenden Rollenverteilung gebildet. Alternativ sendet das zweite Hörgerät 14 seine Betriebsfähigkeit nicht selbst an das erste Hörgerät 2, sondern ermittelt allein die Rollenverteilung und teilt diese dann mittels eines Antwortsignals S2 dem ersten Hörgerät 2 mit, sodass dieses die beiden Betriebsfähigkeiten nicht miteinander vergleichen muss, sondern direkt seine Rolle mitgeteilt bekommt. Im nun gebildeten Netzwerk 12 steuert der Master den Datenaustausch und übernimmt somit die Koordination der Datenkommunikation.

In Fig. 4 ist der Fall gezeigt, dass ausgehend vom Netzwerk der Fig. 3 ein dritter Nutzer P hinzukommt, mit einem dritten Hörgerät 16, welches ebenfalls dem Netzwerk 12 beitritt. In Fig. 4 ist beispielhaft das erste Hörgerät 2 der Master. Das dritte Hörgerät 16 befindet sich zunächst wie beschrieben im Suchmodus und erkennt dabei das bereits vorhandene Netzwerk 12. Aus den Daten, welche im Netzwerk 12 zwischen dem ersten und dem zweiten Hörgerät 2, 14 ausgetauscht werden, erkennt das dritte Hörgerät 16, welches Hörgerät 2, 16 der Master ist und meldet sich dann bei diesem an.

Wenn das Hörgerät 16 dem Netzwerk 12 beitritt und dieses Netzwerk 12 bereits einen alten Master aufweist, nämlich eines der Hörgeräte 2, 14, dessen Betriebsfähigkeit jedoch schlechter ist als die Betriebsfähigkeit des Hörgeräts 16, dann wird dieses dritte Hörgerät 16 als neuer Master des Netzwerks 12 ausgewählt und der alte Master nimmt fortan als Slave am Netzwerk 12 teil. Im gezeigten Fall ist dagegen die Betriebsfähigkeit des hinzukommenden Hörgeräts 16 schlechter als die des alten Masters, nämlich des ersten Hörgeräts 2, sodass dieses der Master des Netzwerks 12 bleibt und das Hörgerät 16 als Slave teil nimmt. Analoges gilt für den Fall, dass das Hörgerät 2 einem bereits bestehenden Netzwerk 12 beitritt.

Entsprechend ergibt sich vorliegend für den Fall, dass das erste Hörgerät 2 bereits als Master an dem Netzwerk 12 teilnimmt und das dritte Hörgerät 16 als ein neues Hörgerät dem Netzwerk 12 beitritt, wird vorzugsweise erneut entschieden, ob das erste Hörgerät 2 fortan als Master oder als Slave an dem Netzwerk 12 teilnimmt. Falls das dritte, neue Hörgerät 16 eine höhere Betriebsfähigkeit aufweist, wird an dieses die Rolle des Masters abgetreten, ansonsten tritt das neue Hörgerät 16 als Slave bei.

Für den nicht explizit gezeigten Fall, dass das erste Hörgerät 2 bereits als Slave an dem Netzwerk 12 teilnimmt und der Master, z.B. das zweite oder dritte Hörgerät 14,16, das Netzwerk 12 verlässt, wird ebenfalls erneut entschieden, ob das erste Hörgerät 2 fortan als Master oder als Slave an dem Netzwerk 12 teilnimmt. Falls das erste Hörgerät 2 nach einem Austritt des bisherigen Masters im Netzwerk 12 die höchste Betriebsfähigkeit aufweist, übernimmt das erste Hörgerät 2 die Rolle des Masters. Andernfalls wird dasjenige der anderen Hörgeräte 14, 16 als Master ausgewählt, welches die höchste Betriebsfähigkeit aufweist.

Die Daten, welche beim Datenaustausch über das Netzwerk ausgetauscht werden, sind vorliegend Audiodaten, d.h. die Sprache der Nutzer N, O, P. Die Audiodaten werden dadurch gewonnen, dass ein jeweiliges Hörgerät 2, 14, 16 die Sprache des zugeordneten Nutzers N, O, P aufnimmt. Diese aufgenommene Sprache wird dann über das Netzwerk 12 an die anderen Hörgeräte 2, 14, 16 übermittelt. Dabei ist dann mittels des Netzwerks 12 eine Art Telefonverbindung der Hörgeräte 2, 14, 16 realisiert. Alternativ oder zusätzlich sind die Daten Steuerdaten für die Hörgeräte 2, 14, 16 oder sonstige Informationen.

Im gezeigten Ausführungsbeispiel ist das Netzwerk 12 ein dezentrales und relaisfreies Netzwerk 12, in welchem die Hörgeräte 2, 14, 16 direkt miteinander verbunden sind. Dabei sind die Hörgeräte 2, 14, 16 nach Art eines Peer-to-Peer-Netzwerkes miteinander verbunden, mit dem Unterschied, dass eines der Hörgeräte 2, 14, 16 als Master den Datenaustausch steuert. Auf zusätzliche Geräte, welche nicht Hörgeräte sind, wird dagegen wenigstens zum Datenaustausch der Hörgeräte 2, 14, 16 untereinander verzichtet. Vielmehr erfolgt der Datenaustausch unmittelbar zwischen den Hörgeräten 2, 14, 16 und somit nicht über zusätzliche Relaisstationen, Hubs, Router oder dergleichen. Das Netzwerk 12 ist somit ein echtes Hörgeräte-Netzwerk 12.

### Bezugszeichenliste

- 2: Hörgerät, Ego-Hörgerät, erstes Hörgerät
- 4: Mikrofon
- 6: Signalverarbeitung
- 8: Hörer
- 10: Steuereinheit
- 12: Netzwerk
- 14: anderes Hörgerät, zweites Hörgerät
- 16: anderes Hörgerät, drittes Hörgerät
- 18: Drahtlosschnittstelle
- 20: Energiespeicher
- B1: Betriebsparameter, Ladezustand
- B2: Betriebsparameter, Übertragungsqualität
- B3: Betriebsparameter,
- N: Nutzer des ersten Hörgeräts
- O: Nutzer des zweiten Hörgeräts
- P: Nutzer des dritten Hörgeräts
- S1: Suchsignal
- S2: Antwortsignal

## Patentansprüche

1. Verfahren zum Betrieb eines Hörgeräts (2),
- wobei das Hörgerät (2) einem Nutzer (N) zugeordnet ist und mit einem oder mehreren anderen Hörgeräten (14, 16), welche jeweils einem anderen Nutzer (O, P) zugeordnet sind, zum Datenaustausch in einem gemeinsamen Netzwerk (12) verbunden wird oder ist,
- wobei das Hörgerät (2) oder eines der anderen Hörgeräte (14, 16) den Datenaustausch steuert, indem dieses als ein Master an dem Netzwerk (12) teilnimmt, und wobei alle übrigen Hörgeräte (2, 14, 16) jeweils als ein Slave an dem Netzwerk (12) teilnehmen,
- wobei entschieden wird, ob das Hörgerät (2) als Master oder als Slave an dem Netzwerk (12) teilnimmt, indem eine Betriebsfähigkeit des Hörgeräts (2) bestimmt wird und mit der Betriebsfähigkeit der jeweils anderen Hörgeräte (14, 16) verglichen wird und indem das Hörgerät (2) als Master teilnimmt, falls das Hörgerät (2) die höchste Betriebsfähigkeit aufweist, und ansonsten als Slave,
- wobei ein Suchmodus des Hörgeräts (2) aktiviert ist, falls dieses gerade nicht an einem Netzwerk (12) teilnimmt,
- wobei das Hörgerät (2) im Suchmodus ein Suchsignal aussendet, welches die Betriebsfähigkeit des Hörgeräts (2) enthält, sodass diese von einem anderen Hörgerät (14, 16) empfangbar ist und mit dessen Betriebsfähigkeit vergleichbar ist.

2. Verfahren nach Anspruch 1,
wobei die Betriebsfähigkeit anhand eines Ladezustands (B1) eines Energiespeichers (20) des Hörgeräts (2) bestimmt wird, sodass das Hörgerät (2) als Master am Netzwerk (12) teilnimmt, wenn der Ladezustand (B1) des Hörgeräts (2) größer ist als der Ladezustand (B1) aller anderen Hörgeräte (14, 16) im Netzwerk (12), und ansonsten als Slave.

3. Verfahren nach Anspruch 1 oder 2,
wobei die Betriebsfähigkeit anhand einer Übertragungsqualität (B2) des Hörgeräts (2) bezüglich des Sendens und/oder Empfanges von Daten über das Netzwerk (12) bestimmt wird, sodass das Hörgerät (2) als Master am Netzwerk (12) teilnimmt, wenn die Übertragungsqualität (B2) des Hörgeräts (2) größer ist als die Übertragungsqualität (B2) aller anderen Hörgeräte (2) im Netzwerk (12), und ansonsten als Slave.

4. Verfahren nach einem der Ansprüche 1 bis 3,
wobei die Betriebsfähigkeit anhand einer Fehlerrate (B3) beim Datenaustausch bestimmt wird, sodass das Hörgerät (2) als Master am Netzwerk (12) teilnimmt, wenn die Fehlerrate (B3) des Hörgeräts (2) geringer ist als die Fehlerrate (B3) aller anderen Hörgeräte (14, 16) im Netzwerk (12), und ansonsten als Slave.

5. Verfahren nach einem der Ansprüche 1 bis 4,
wobei das Hörgerät (2) als neuer Master des Netzwerks (12) ausgewählt wird, wenn das Hörgerät (2) dem Netzwerk (12) beitritt und dieses bereits einen alten Master aufweist, dessen Betriebsfähigkeit jedoch schlechter ist als die Betriebsfähigkeit des Hörgeräts (2), sodass der alte Master fortan als Slave am Netzwerk (12) teilnimmt.

6. Verfahren nach einem der Ansprüche 1 bis 5,
wobei für den Fall, dass das Hörgerät (2) bereits als Master an dem Netzwerk (12) teilnimmt und ein neues Hörgerät (14, 16) dem Netzwerk (12) beitritt, erneut entschieden wird, ob das Hörgerät (2) als Master oder als Slave an dem Netzwerk (12) teilnimmt.

7. Verfahren nach einem der Ansprüche 1 bis 6,
wobei für den Fall, dass das Hörgerät (2) bereits als Slave an dem Netzwerk (12) teilnimmt und der Master das Netzwerk (12) verlässt, erneut entschieden wird, ob das Hörgerät (2) als Master oder als Slave an dem Netzwerk (12) teilnimmt.

8. Verfahren nach einem der Ansprüche 1 bis 7,
wobei das Hörgerät (2) im Suchmodus hört, ob ein oder mehrere andere Hörgeräte (14, 16) in Reichweite sind und deren Suchsignale empfängt, um die jeweilige Betriebsfähigkeit der anderen Hörgeräte (14, 16) mit der eigenen Betriebsfähigkeit zu vergleichen.

9. Verfahren nach einem der Ansprüche 1 bis 8,
wobei der Suchmodus dadurch aktiviert wird, dass das Hörgerät Sprache erkennt.

10. Verfahren nach einem der Ansprüche 1 bis 9,
wobei beim Datenaustausch über das Netzwerk (12) Audiodaten ausgetauscht werden, welche dadurch gewonnen werden, dass ein jeweiliges Hörgerät (2, 14, 16) die Sprache des zugeordneten Nutzers (N, O, P) aufnimmt.

11. Verfahren nach einem der Ansprüche 1 bis 10,
wobei das Netzwerk (12) ein dezentrales und relaisfreies Netzwerk (12) ist, in welchem die Hörgeräte (2, 14, 16) direkt miteinander verbunden sind.

12. Verfahren nach einem der Ansprüche 1 bis 11,
wobei das Netzwerk (12) ein drahtloses Netzwerk (12) ist.

13. Hörgerät (2), welches ausgebildet ist zur Durchführung eines Verfahrens gemäß einem der Ansprüche 1 bis 12.

14. Verfahren zum Betrieb eines Netzwerks (12) mit mehreren Hörgeräten (2, 14, 16), welche unterschiedlichen Nutzern (N, O, P) zugeordnet sind, wobei eines der Hörgeräte (2, 14, 16) als ein Master ausgewählt wird, zur Steuerung eines Datenaustauschs zwischen den Hörgeräten (2, 14, 16), und wobei alle anderen Hörgeräte (2, 14, 16) jeweils als ein Slave ausgewählt werden,
wobei dasjenige Hörgerät (2, 14, 16) als Master ausgewählt wird, welches im Vergleich zu den anderen Hörgeräten (2, 14, 16) die höchste Betriebsfähigkeit aufweist,
wobei ein Suchmodus des Hörgeräts (2, 14, 16) aktiviert wird, falls dieses gerade nicht an einem Netzwerk (12) teilnimmt,
wobei das Hörgerät (2, 14, 16) im Suchmodus ein Suchsignal aussendet, welches die Betriebsfähigkeit des Hörgeräts (2, 14, 16) enthält, sodass diese von einem anderen Hörgerät (2, 14, 16) empfangbar ist und mit dessen Betriebsfähigkeit vergleichbar ist.

## Claims

1. Method of operating a hearing device (2),
- wherein the hearing device (2) is assigned to a user (N) and is or will be connected to one or more other hearing devices (14, 16), which are each assigned to a different user (O, P), for data exchange in a common network (12),
- wherein the hearing device (2) or one of the other hearing devices (14, 16) controls the data exchange by subscribing as master to the network (12), and wherein all remaining hearing devices (2, 14, 16) each subscribe to the network (12) as slave,
- wherein it is decided whether the hearing device (2) subscribes to the network (12) as master or as slave by determining an operability of the hearing device (2) and comparing it with the operability of the respective other hearing devices (14, 16) and by the hearing device (2) subscribing as master if the hearing device (2) has the highest operability, and otherwise as slave,
- wherein a search mode of the hearing device (2) is activated if said hearing device (2) does not currently subscribe to a network (12),
- wherein, in the search mode, the hearing device (2) emits a search signal containing the operability of the hearing device (2), so that it can be received by another hearing device (14, 16) and can be compared to its operability.

2. Method according to claim 1,
wherein the operability is determined based on a charge state (B1) of an energy storage (20) of the hearing device (2), so that the hearing device (2) subscribes to the network (12) as master if the charge state (B1) of the hearing device (2) is greater than the charge state (B1) of all other hearing devices (14, 16) in the network (12), and otherwise as slave.

3. Method according to claim 1 or 2,
wherein the operability is determined based on a transmission quality (B2) of the hearing device (2) with respect to sending and/or receiving data over the network (12), so that the hearing device (2) subscribes to the network (12) as master if the transmission quality (B2) of the hearing device (2) is greater than the transmission quality (B2) of all other hearing devices (2) in the network (12), and otherwise as slave.

4. Method according to one of claims 1 to 3,
wherein the operability is determined based on a data exchange error rate (B3), so that the hearing device (2) subscribes to the network (12) as master if the error rate (B3) of the hearing device (2) is lower than the error rate (B3) of all other hearing devices (14, 16) in the network (12), and otherwise as slave.

5. Method according to one of claims 1 to 4,
wherein the hearing device (2) is selected as a new master of the network (12) when the hearing device (2) joins the network (12) and the network (12) already has an old master, but the operability of the old master is worse than the operability of the hearing device (2), so that from now on the old master subscribes to the network (12) as slave.

6. Method according to one of claims 1 to 5,
wherein in the event that the hearing device (2) already subscribes to the network (12) as master and a new hearing device (14, 16) joins the network (12), it is again decided whether the hearing device (2) subscribes to the network (12) as master or as slave.

7. Method according to one of claims 1 to 6,
wherein in the event that the hearing device (2) already subscribes to the network (12) as slave and the master leaves the network (12), it is again decided whether the hearing device (2) subscribes to the network (12) as master or as slave.

8. Method according to one of claims 1 to 7,
wherein, in the search mode, the hearing device (2) listens whether one or more other hearing devices (14, 16) are within range and receives their search signals in order to compare the respective operability of the other hearing devices (14, 16) with its own operability.

9. Method according to one of claims 1 to 8,
wherein the search mode is activated by the hearing device detecting speech.

10. Method according to one of claims 1 to 9,
wherein audio data is exchanged during the data exchange over the network (12), which audio data is obtained by a respective hearing device (2, 14, 16) acquiring the speech of the assigned user (N, O, P).

11. Method according to one of claims 1 to 10,
wherein the network (12) is a decentralized and relay-free network (12), in which the hearing devices (2, 14, 16) are directly interconnected.

12. Method according to one of claims 1 to 11,
wherein the network (12) is a wireless network (12).

13. Hearing device (2) adapted to carry out a method according to one of claims 1 to 12.

14. Method of operating a network (12) with several hearing devices (2, 14, 16) assigned to different users (N, O, P),
wherein one of the hearing devices (2, 14, 16) is selected as master, for controlling a data exchange between the hearing devices (2, 14, 16), and wherein all other hearing devices (2, 14, 16) are each selected as slave, wherein the hearing device (2, 14, 16) having the highest operability compared to the other hearing devices (2, 14, 16) is selected as master,
wherein a search mode of the hearing device (2, 14, 16) is activated if the hearing device does not currently subscribe to a network (12),
wherein, in the search mode, the hearing device (2, 14, 16) emits a search signal containing the operability of the hearing device (2, 14, 16), so that it can be received by another hearing device (2, 14, 16) and can be compared to its operability.

## Revendications

1. Procédé pour faire fonctionner un appareil auditif (2),
dans lequel l'appareil auditif (2) est associé à un utilisateur (N) et est ou sera connecté à un ou plusieurs autres appareils auditifs (14, 16), qui sont chacun associés à un utilisateur différent (O, P), pour l'échange de données dans un réseau commun (12),
dans lequel l'appareil auditif (2) ou l'un des autres appareils auditifs (14, 16) commande l'échange de données en participant au réseau (12) en tant que maître, et dans lequel tous les autres appareils auditifs (2, 14, 16) participent chacun au réseau (12) en tant qu'esclave,
dans lequel il est décidé si l'appareil auditif (2) participe au réseau (12) en tant que maître ou esclave en déterminant une opérabilité de l'appareil auditif (2) et en la comparant à l'opérabilité des autres appareils auditifs respectifs (14, 16) et en participant en tant que maître si l'appareil auditif (2) a l'opérabilité la plus élevée, et autrement en tant qu'esclave,
dans lequel un mode de recherche de l'appareil auditif (2) est activé si ledit appareil auditif (2) ne participe actuellement pas à un réseau (12),
dans lequel, dans le mode de recherche, l'appareil auditif (2) émet un signal de recherche contenant l'opérabilité de l'appareil auditif (2), de sorte qu'il est recevable par et comparable à l'opérabilité d'un autre appareil auditif (14, 16).

2. Procédé selon la revendication 1,
dans lequel l'opérabilité est déterminée sur la base d'un état de charge (B1) d'un accumulateur d'énergie (20) de l'appareil auditif (2), de sorte que l'appareil auditif (2) participe au réseau (12) en tant que maître si l'état de charge (B1) de l'appareil auditif (2) est supérieur à l'état de charge (B1) de tous les autres appareils auditifs (14, 16) dans le réseau (12), et autrement en tant qu'esclave.

3. Procédé selon la revendication 1 ou 2,
dans lequel l'opérabilité est déterminée sur la base d'une qualité de transmission (B2) de l'appareil auditif (2) par rapport à l'envoi et/ou à la réception de données sur le réseau (12), de sorte que l'appareil auditif (2) participe au réseau (12) en tant que maître si la qualité de transmission (B2) de l'appareil auditif (2) est supérieure à la qualité de transmission (B2) de tous les autres appareils auditifs (2) dans le réseau (12), et autrement en tant qu'esclave.

4. Procédé selon l'une des revendications 1 à 3,
dans lequel l'opérabilité est déterminée sur la base d'un taux d'erreur d'échange de données (B3), de sorte que l'appareil auditif (2) participe au réseau (12) en tant que maître si le taux d'erreur (B3) de l'appareil auditif (2) est inférieur au taux d'erreur (B3) de tous les autres appareils auditifs (14, 16) dans le réseau (12), et autrement en tant qu'esclave.

5. Procédé selon l'une des revendications 1 à 4,
dans lequel l'appareil auditif (2) est sélectionné en tant que nouveau maître du réseau (12) lorsque l'appareil auditif (2) rejoint le réseau (12) et que le réseau (12) a déjà un ancien maître, mais que l'opérabilité de l'ancien maître est inférieure à l'opérabilité de l'appareil auditif (2), de sorte que l'ancien maître participe désormais au réseau (12) en tant qu'esclave.

6. Procédé selon l'une des revendications 1 à 5,
dans lequel, dans le cas où l'appareil auditif (2) participe déjà au réseau (12) en tant que maître et où un nouvel appareil auditif (14, 16) rejoint le réseau (12), il est à nouveau décidé si l'appareil auditif (2) participe au réseau (12) en tant que maître ou en tant qu'esclave.

7. Procédé selon l'une des revendications 1 à 6,
dans lequel, dans le cas où l'appareil auditif (2) participe déjà au réseau (12) en tant qu'esclave et où le maître quitte le réseau (12), il est à nouveau décidé si l'appareil auditif (2) participe au réseau (12) en tant que maître ou esclave.

8. Procédé selon l'une des revendications 1 à 7,
dans lequel, dans le mode de recherche, l'appareil auditif (2) écoute si un ou plusieurs autres appareils auditifs (14, 16) sont à portée et reçoit leurs signaux de recherche afin de comparer l'opérabilité respective des autres appareils auditifs (14, 16) avec sa propre opérabilité.

9. Procédé selon l'une des revendications 1 à 8,
dans lequel le mode de recherche est activé par la reconnaissance de la parole par l'appareil auditif.

10. Procédé selon l'une des revendications 1 à 9,
dans lequel, lors l'échange de données via le réseau (12), des données audio sont échangées, qui sont obtenues par un appareil auditif respective (2, 14, 16) enregistrant la parole de l'utilisateur associé (N, O, P).

11. Procédé selon l'une des revendications 1 à 10,
dans lequel le réseau (12) est un réseau décentralisé et sans relais (12), dans lequel les appareils auditifs (2, 14, 16) sont directement interconnectés.

12. Procédé selon l'une des revendications 1 à 11,
dans lequel le réseau (12) est un réseau sans fil (12).

13. Appareil auditif (2) adapté pour mettre en œuvre un procédé selon l'une des revendications 1 à 12.

14. Procédé pour faire fonctionner un réseau (12) avec plusieurs d'autres appareils auditifs (2, 14, 16) associés à différents utilisateurs (N, O, P), dans lequel l'un des appareils auditifs (2, 14, 16) est sélectionné comme maître pour contrôler l'échange de données entre les appareils auditifs (2, 14, 16), et dans lequel tous les autres appareils auditifs (2, 14, 16) sont chacun sélectionnes comme esclave,
dans lequel l'appareil auditif (2, 14, 16), qui a la plus grande opérabilité par rapport aux autres appareils auditifs (2, 14, 16), est sélectionné comme maître,
dans lequel un mode de recherche de l'appareil auditif (2, 14, 16) est activé si ledit l'appareil auditif (2, 14, 16) ne participe actuellement pas à un réseau (12),
dans lequel, dans le mode de recherche, l'appareil auditif (2, 14, 16) émet un signal de recherche contenant l'opérabilité de l'appareil auditif (2, 14, 16), de sorte qu'il est recevable par un autre appareil auditif (2, 14, 16) et est comparable à son opérabilité.
